(19) **Europäisches Patentamt European Patent Office Office européen des brevets**

(11) **EP 2 597 614 A1**

(12) **EUROPEAN PATENT APPLICATION**

(43) Date of publication:
**29.05.2013 Bulletin 2013/22**

(51) Int Cl.:
***G06T 7/00*** (2006.01)

(21) Application number: **12194564.6**

(22) Date of filing: **28.11.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **28.11.2011 JP 2011258663**<br><br>(71) Applicant: **Clarion Co., Ltd.**<br>**Saitama 330-0081 (JP)** | (72) Inventors:<br>• **Sakano, Morihiko**<br>  **Tokyo, 100-8220 (JP)**<br>• **Sato, Keiji**<br>  **Saitama, 330-0081 (JP)**<br>• **Shima, Takeshi**<br>  **Tokyo, 100-8220 (JP)**<br><br>(74) Representative: **MERH-IP**<br>**Matias Erny Reichl Hoffmann**<br>**Paul-Heyse-Strasse 29**<br>**80336 München (DE)** |

(54) **Automotive camera system and its calibration method and calibration program**

(57) Provided is a calibration method for an automotive camera system that can easily calibrate intrinsic parameters and extrinsic parameters of an image taking unit. A calibration method for an automotive camera system 1 includes: recognizing a recognition target object including a preset straight line portion, from an image taken by each of image taking units 307 to 310, and extracting feature points of the recognition target object from the image; projecting the feature points onto a virtual spherical surface 601, estimating intrinsic parameters of the image taking units 307 to 310 on the basis of a shape of a feature point sequence formed on the virtual spherical surface 601, and calibrating the estimated intrinsic parameters; and calculating an overhead point of view of the image on the basis of the feature points, estimating extrinsic parameters of the image taking units 307 to 310 on the basis of the calculated overhead point of view, and calibrating the estimated extrinsic parameters.

## FIG. 1

EP 2 597 614 A1

**Description**

BACKGROUND OF THE INVENTION

Field of the Invention

The present invention relates to an automotive camera system that recognizes an image of an environment around a vehicle, as well as its calibration method and calibration program.

Background Art

An automotive camera system including an image taking unit and an image processing device has objects to improve the convenience of a vehicle, achieve driving safety, and perform advanced position correction of a car navigation, and the role of the automotive camera system is becoming increasingly important. Along with development in image processing technology, a wide variety of techniques have been developed for recognizing a road surface or indications and objects on a road. Consequently, techniques for recognizing an image of an environment around a vehicle to perform vehicle control for lane departure prevention, collision avoidance, autocruise, and the like have also been developed and started to be put into practical use. Such vehicle control requires a measurement technique for measuring a relative position of a recognition target object with respect to the vehicle. In the case where this measurement technique is implemented by a camera, it is necessary to associate a pixel on an image with the corresponding position in the real space with the use of: extrinsic parameters of the camera indicating the position and attitude of the camera; and intrinsic parameters indicating an optic axis position, a focal length, lens distortion, and the like. The extrinsic parameters and the intrinsic parameters, which are set on the basis of design values, have inevitable errors in reality, and hence calibration for correcting deviation between the pixel and the real space is necessary to express a true correspondence relation therebetween.

JP Patent Publication (Kokai) No. 2004-200819 A describes a technique for correcting an optic axis of a camera using a reference marker. For the optic axis correction, it is necessary to prepare the reference marker. The reference marker needs to be set to a position at which a relative relation between the reference marker and the camera is determined. In the case of an automotive camera, the position of the camera needs to be determined in the state where the camera is set. That is, equipment for vehicle positioning is necessary. For the reason of costs required for such positioning equipment, it is desirable to obtain a mechanism that enables calibration of the camera without the positioning.

JP Patent Publication (Kokai) No. 2008-011174 A describes a method of correcting, even during vehicle running, an optic axis of an automotive camera and a camera height on the basis of information on a road sign that is obtained on a road with high frequency. This method does not require equipment investment for calibration, and thus is superior in cost reduction. This method however can correct only the optic axis of the automotive camera and the information on the road sign, and cannot correct intrinsic parameters such as lens distortion and an optic axis and extrinsic parameters other than the camera height, such as a set position of the camera. In particular, fisheye cameras are greatly affected by lens distortion, and hence it is desirable that the lens distortion can also be corrected.

The present invention, which has been made in view of the above, has an object to provide an automotive camera system that can easily calibrate intrinsic parameters and extrinsic parameters of an image taking unit, as well as its calibration method and calibration program.

SUMMARY OF THE INVENTION

In order to achieve the above-mentioned object, the present invention provides a calibration method for an automotive camera system, the method including: taking an image around a vehicle; recognizing a recognition target object including a preset straight line portion, from the taken image, and extracting feature points of the recognition target object from the image; projecting the extracted feature points onto a virtual spherical surface, estimating an intrinsic parameter of an image taking unit on a basis of a shape of a feature point sequence formed on the virtual spherical surface, and calibrating the estimated intrinsic parameter; and/or calculating an overhead point of view of the image on a basis of the extracted feature points, estimating an extrinsic parameter of the image taking unit on a basis of the calculated overhead point of view, and calibrating the estimated extrinsic parameter.

Further, in order to achieve the above-mentioned object, the present invention provides an automotive camera system including: an image taking unit that takes an image around a vehicle; a feature point extracting unit that recognizes a recognition target object including a preset straight line portion, from the image taken by the image taking unit, and extracts feature points of the recognition target object from the image; an intrinsic parameter calibrating unit that projects the feature points extracted by the feature point extracting unit onto a virtual spherical surface, estimates an intrinsic parameter of the image taking unit on a basis of a shape of a feature point sequence formed on the virtual spherical surface, and calibrates the estimated intrinsic parameter; and/or an extrinsic parameter calibrating unit that calculates an overhead point of view of the image on a basis of the feature points extracted by the feature point extracting unit, estimates an extrinsic parameter of the image taking unit on a basis of the calculated overhead point of view, and calibrates the estimated extrinsic parameter.

Further, in order to achieve the above-mentioned object, the present invention provides a calibration program for an automotive camera system to be executed by an image processing device, the calibration program including: recognizing a recognition target object including a preset straight line portion, from an image around a vehicle taken by an image taking unit of the automotive camera system, and extracting feature points of the recognition target object from the image; projecting the extracted feature points onto a virtual spherical surface, estimating an intrinsic parameter of the image taking unit on a basis of a shape of a feature point sequence formed on the virtual spherical surface, and/or calibrating the estimated intrinsic parameter; and calculating an overhead point of view of the image on a basis of the extracted feature points, estimating an extrinsic parameter of the image taking unit on a basis of the calculated overhead point of view, and calibrating the estimated extrinsic parameter.

According to the present invention, the intrinsic parameter and the extrinsic parameter of the image taking unit can be easily calibrated. Note that objects, configurations, and effects other than those described above will be clarified by way of an embodiment described below.

BRIEF DESCRIPTION OF THE DRAWINGS

FIG. 1 is a model diagram illustrating the state where a vehicle on which an automotive camera system according to an embodiment of the present invention is mounted is running on a road.
FIG. 2 is a diagram illustrating distortion of an image.
FIG. 3 is a diagram for describing the distortion.
FIG. 4 is a diagram illustrating a configuration example of the automotive camera system according to the present embodiment.
FIG. 5 is a diagram illustrating another configuration example of the automotive camera system according to the present embodiment.
FIG. 6 is a diagram for describing a calibration method for intrinsic parameters using spherical projection.
FIGS. 7(A), 7(B), and 7(C) are diagrams illustrating a difference in spherical projection between a curved line and a straight line.
FIGS. 8(A), 8(B), 8(C), and 8(D) are diagrams illustrating definition of a camera rotation.
FIGS. 9(A) and 9(B) are diagrams for describing a calibration method for extrinsic parameters (a pitch, a yaw, and a camera height).
FIGS. 10(A) and 10(B) are diagrams for describing a calibration method for extrinsic parameters (a roll and a translation).

DETAILED DESCRIPTION OF THE PREFERRED EMBODIMENTS

Hereinafter, an embodiment of the present invention is described in detail with reference to the drawings.

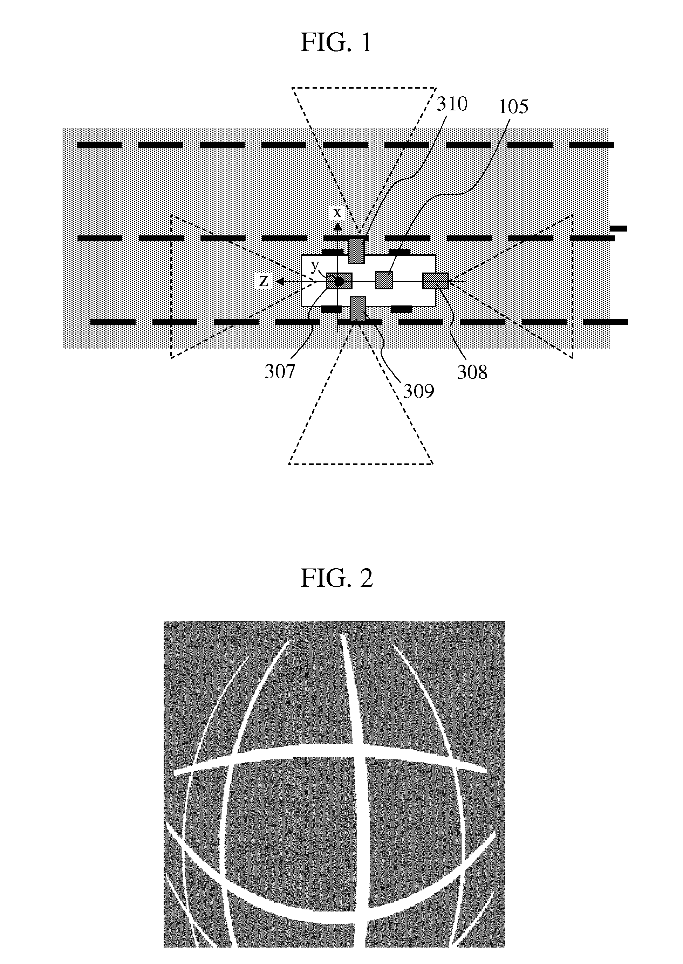

FIG. 1 is a model diagram illustrating the state where a vehicle on which an automotive camera system according to the present embodiment is mounted is running on a road.
For example, as illustrated in FIG. 1, the automotive camera system includes image taking units 307, 308, 309, and 310 and an image processing device 105. The image taking units 307, 308, 309, and 310 and the image processing device 105 have been put into practical use for the purpose of monitoring for improvement in convenience of the vehicle and driving safety on the basis of image information from road markers, road signs, and the like, and can be applied to the embodiment of the present invention.
In the present embodiment, four cameras that each monitor an area around the vehicle are attached as the image taking units 307, 308, 309, and 310, but any number (equal to or more than one) of cameras may be attached.
Further, the attachment position and attitude of each camera may be freely determined as long as the camera can take an image of a road surface. Further, infrared cameras and various other cameras may be adopted for the cameras, because the viewing angle of each camera, the type of its imaging element, characteristics of its lens, and the like are not particularly limited. Similarly, any particular limits are not put on all portions stated as the image taking units 307, 308, 309, and 310 in the description below, unless otherwise specified.
The image processing device 105 is configured in, for example, an ECU of the automotive camera system, and executes a calibration program installed in advance, to thereby implement internal functions such as a feature point extracting unit 301, an intrinsic parameter calibrating unit 303, and an extrinsic parameter calibrating unit 304 to be described later.

The image processing device 105 recognizes a recognition target object including a preset straight line portion, such as a white line and a road marker, from an image taken by each of the image taking units 307, 308, 309, and 310, and extracts predetermined feature points or feature lines from the image. Then, the image processing device 105 estimates camera parameters including distortion (an optic axis, the distortion, a pixel aspect ratio, a focal length, and the three-dimensional set position and set attitude of the camera), from the extracted information.

Here, the distortion is defined. The distortion refers to, for example, a state as illustrated in FIG. 2 where an image is radially curved with respect to the optic axis position. FIG. 2 is a diagram illustrating the distortion of the image, which is obtained by taking an image of a square grid pattern drawn on a plane. Examples of the distortion include barrel-like distortion, bobbin-like distortion, and distortion designed for a fisheye camera. Such distortion can be approximated using the following polynomial Expression (1).

[Expression 1]

$$r = k_1\theta + k_2\theta^3 + k_3\theta^5 + ... \qquad (1)$$

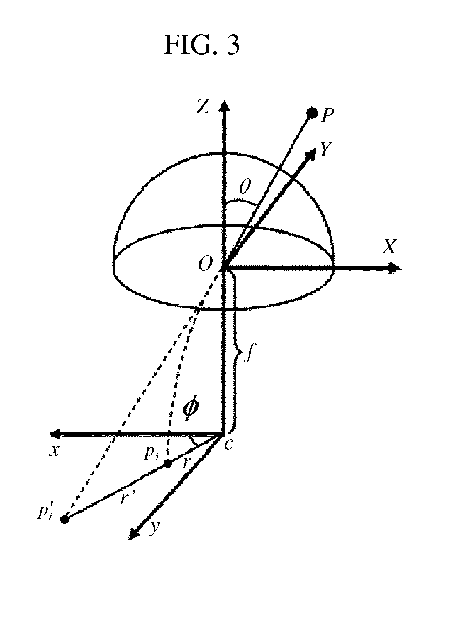

In this expression, $\theta$ denotes the incident angle of light on a lens. $k_1$, $k_2$, $k_3$ ... each denote a distortion factor, which determines the shape of distortion. r denotes a distance of an imaging position from the optic axis in the case of the incident angle $\theta$ and the distortion factors $k_1$, $k_2$, $k_3$ ... The relation of these elements is illustrated in FIG. 3.

FIG. 3 is a diagram for describing the camera parameters.

In FIG. 3, X, Y, and Z denote camera coordinate axes, P denotes a point of an image taking target in the real space, f denotes a focal length, c denotes an optic axis position, $p'_i$ denotes a projected pixel position of P without distortion, $p_i$ denotes a projected position under the influence of distortion, and x and y denote a horizontal axis and a vertical axis of an image plane, respectively. z denotes an optic axis, and $\varphi$ denotes an angle of deviation when $p_i$ is expressed in polar coordinates on the image plane. Distortion of the optic axis image center is corrected by estimating $k_1$, $k_2$, $k_3$ ...

Fisheye cameras are provided with designed distortion in order to take an image in a wide area. According to an orthographic projection method, a stereographic projection method, and an equal area projection method that are fisheye models, description using functions of sin and tan is possible, and hence it is sufficient to estimate only odd-order terms in a distortion model formula.

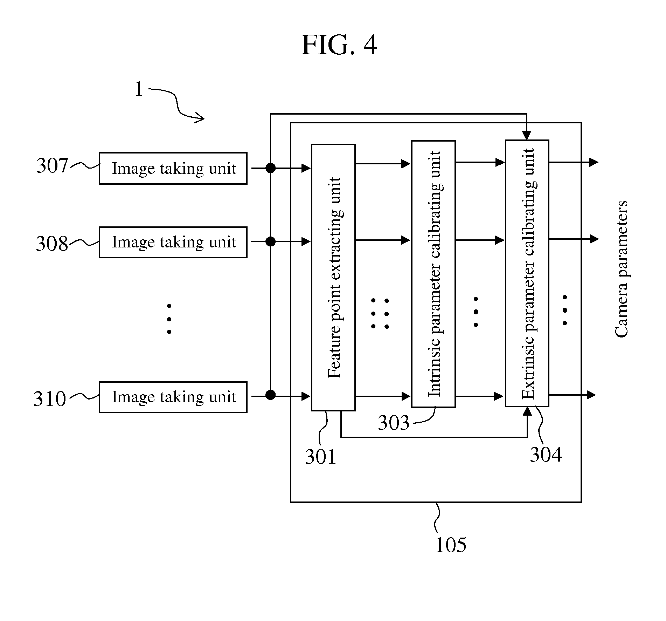

Next, the detail of the automotive camera system is described with reference to FIG. 4.

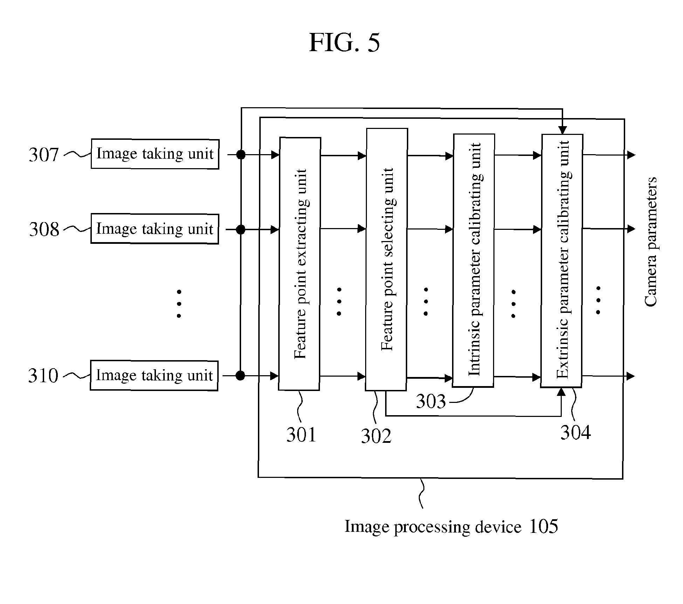

FIGS. 4 and 5 are diagrams for describing a configuration of the automotive camera system according to the present embodiment.

As illustrated in FIG. 4, the automotive camera system includes the image taking units 307, 308, 309, and 310 and the image processing device 105. An image taken by each of the image taking units 307, 308, 309, and 310 is sent to the image processing device 105.

In the image processing device 105, first, the feature point extracting unit 301 processes the input image, and extracts therefrom feature points necessary for calibration. In the present embodiment, the feature point extracting unit 301 extracts, as the feature points, a point sequence on an edge of a linear object (such as a white line, a crosswalk, a stop line, an indication for a crosswalk, a speed indication, a wall surface of a building, and other signs) in the real space. Any object may be extracted as long as the object is linear in the real space. The feature point extracting unit 301 determines an object to be recognized, for example, a crosswalk. Upon recognition of the object, the feature point extracting unit 301 carries out a process of defining an edge point sequence of the object as feature points.

Alternatively, as illustrated in FIG. 5, the image processing device 105 may perform edge extraction on the image taken by each of the image taking units 307, 308, 309, and 310, and then input the resultant edge point sequence to a feature point selecting unit 302. The feature point selecting unit 302 performs a given process on the feature points extracted by the feature point extracting unit 301. In the given process, feature points unnecessary for the calibration are excluded. For example, in the case of extracting an edge point sequence of a white line, a rounded structure in the real space, such as a curve, may be acquired as an edge point sequence, and feature points thereof need to be excluded. In such a case, the feature point selecting unit 302 performs the given process.

The intrinsic parameter calibrating unit 303 calibrates intrinsic parameters using the feature points extracted by the feature point extracting unit 301 or by the feature point extracting unit 301 and the feature point selecting unit 302.

An example method of correcting a distortion parameter is described. For estimation of the distortion parameter, with the use of a line that should be a straight line in the real space but is taken as a curved line due to lens distortion, the distortion parameter is adjusted such that the curved line becomes a straight line. Then, a point sequence on the curved line is defined as feature points, and the feature points thus defined are used. This is achieved by, for example, a calibration method using properties indicated by feature points projected onto a spherical surface.

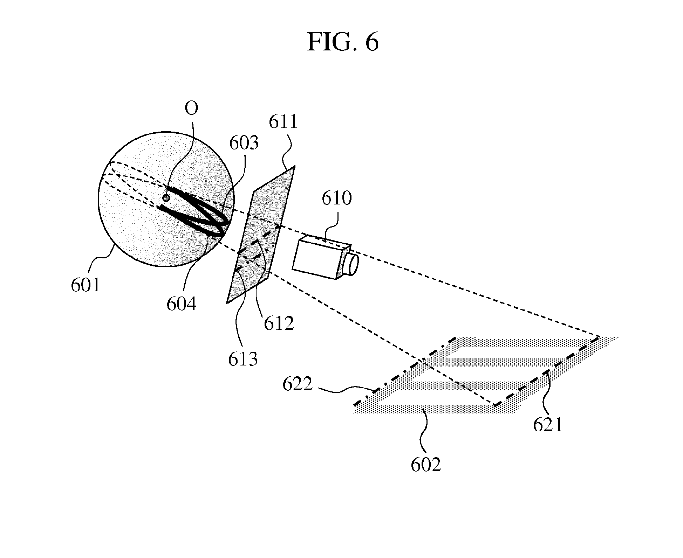

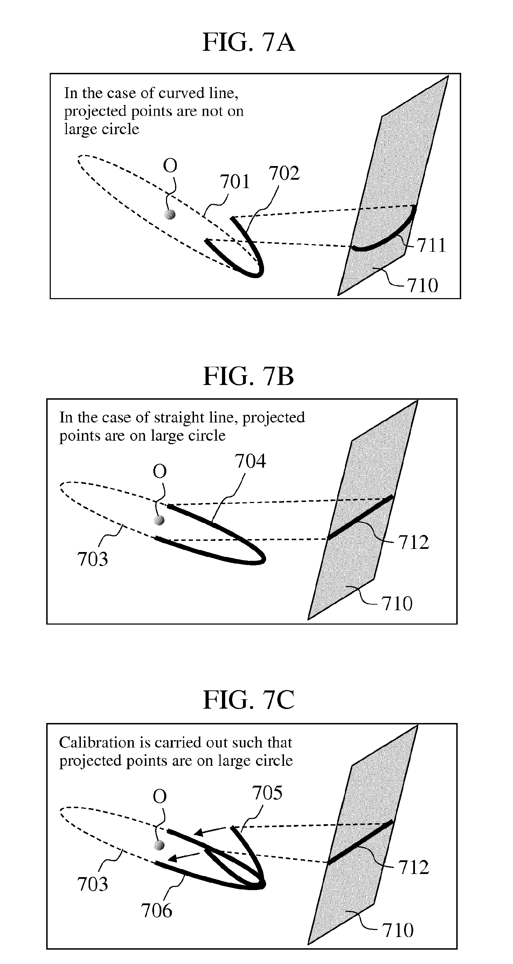

This calibration method is described with reference to FIG. 6 and FIGS. 7(A), 7(B), and 7(C).

FIG. 6 is a diagram for describing a calibration method for intrinsic parameters using spherical projection. A virtual spherical surface 601 as illustrated in FIG. 6 is discussed. The virtual spherical surface 601 is set such that a spherical center O of the virtual spherical surface 601 is placed on the same axis as the optic axis of an image taking unit 610. Specifically, the optic axis of the virtual spherical surface 601 is set so as to coincide with the optic axis of the image taking unit 610. The optic axis of the virtual spherical surface 601 can be set as any straight line as long as the set straight line passes the original point.

The image taking unit 610 takes an image of a recognition target object 602 including a preset straight line portion, such as a crosswalk, so that a taken image 611 is obtained. Straight lines 612 and 613 respectively corresponding to straight line portions 621 and 622 of the recognition target object 602 are displayed on the taken image 611. In the case where the straight lines 612 and 613 of the taken image 611 are projected onto the virtual spherical surface 601, the straight lines 612 and 613 respectively coincide with parts of large circles 603 and 604 on the virtual spherical surface 601. The large circles 603 and 604 are outer circumferential circles each defined by a cross-section passing through the spherical center O of the virtual spherical surface 601.

FIGS. 7(A), 7(B), and 7(C) are diagrams illustrating a difference in spherical projection between a curved line and a straight line. In the case as illustrated in FIG. 7(A) where a taken image line 711 displayed on a taken image 710 is not a straight line but a curved line, projected points 702 are not on a large circle 701 when being projected onto the virtual spherical surface, and do not coincide with a part of the large circle 701. In contrast, in the case where a taken image line 712 is a straight line, projected points 704 coincide with a part of a large circle 703. This property is used to calibrate distortion. That is, as illustrated in FIG. 7(C), a distortion parameter is adjusted such that a feature point sequence 705 of the straight line 712 coincides with a part 706 of the large circle 703.

For the adjustment of the distortion parameter, a cost function including the distortion parameter is designed so as to be minimized when the feature point sequence coincides with a part of the large circle, and the distortion parameter that minimizes the cost function is estimated according to an optimization method. The cost function is expressed by, for example, the following Expression (2).

[Expression 2]

$$\xi = \sum_{l}\sum_{p}\left(n_l \cdot p_{lp}\right)^2 \tag{2}$$

In this expression, $n_1$ denotes a normal vector that is estimated from a $p^{th}$ point $p_{1_p}$ in a group of points obtained by projecting, onto a spherical surface, feature points on an $1^{th}$ curved line displayed on an image. This cost function means that a normal vector of the large circle estimated using the feature point sequence should be orthogonal to a vector expressing actual feature points if the feature points are on the large circle. Here, the following expression is established.

$$p_{lp} = [\sin\theta\,\cos\varphi,\ \sin\theta\,\sin\varphi,\ \cos\theta]$$

where $\varphi$ denotes an angle of deviation when the feature point $p_{1_p}$ is mapped onto an image plane and coordinates thereof are expressed in polar coordinates. Further, with the use of an expression for associating the real space with image coordinates, this cost function includes parameters regarding an optic axis, the aspect ratio of a unit imaging element, a focal length, and distortion in a tangential direction, to thereby enable correction of not only the distortion parameter but also various intrinsic parameters. The above-mentioned method is given as a mere example, and another method of estimating the intrinsic parameters may be adopted.

Next, a method of estimating extrinsic parameters is described.

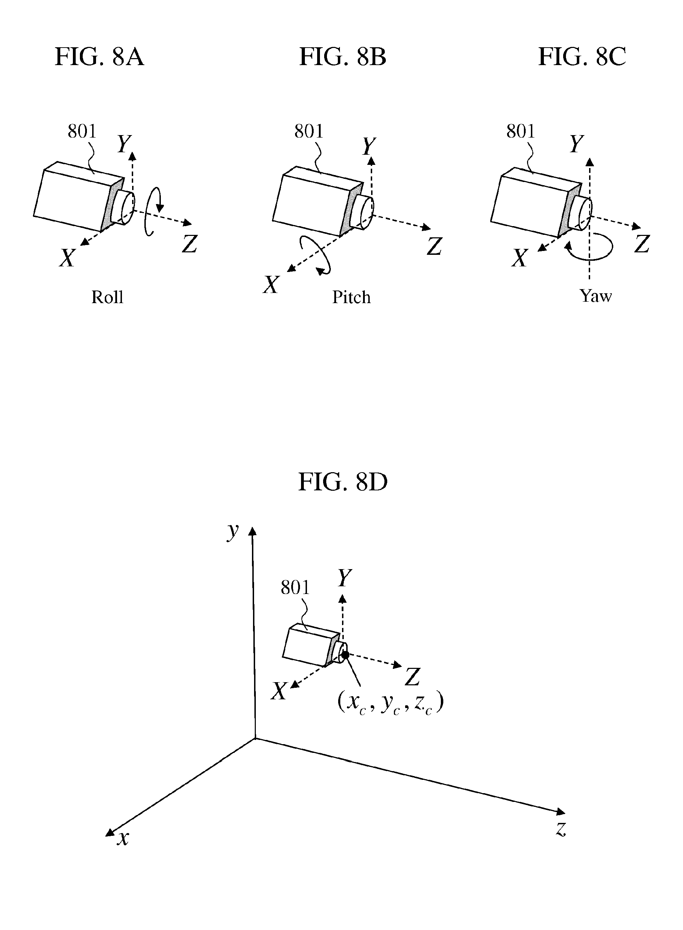

The extrinsic parameters refer to a camera position and a camera attitude of an image taking unit in the real space. The camera position refers to a lens center (xc, yc, zc) of the image taking unit in a world coordinate system (x, y, z) (FIG. 8(D)). As illustrated in FIGS. 8(A), 8(B), 8(C), and 8(D), the attitude of an image taking unit 801 is expressed by three rotations of: a roll (FIG. 8(A)) having a Z axis in a camera coordinate system as its rotational axis; a pitch (FIG. 8(B)) having an X axis therein as its rotational axis; and a yaw (FIG. 8(C)) having a Y axis as its rotational axis. These six parameters are estimated for each camera.

The extrinsic parameter calibrating unit 304 carries out the calibration using the images inputted by the image taking units 307, 308, 309, and 310 and the distortion parameter and the intrinsic parameters estimated by the intrinsic parameter calibrating unit 303.

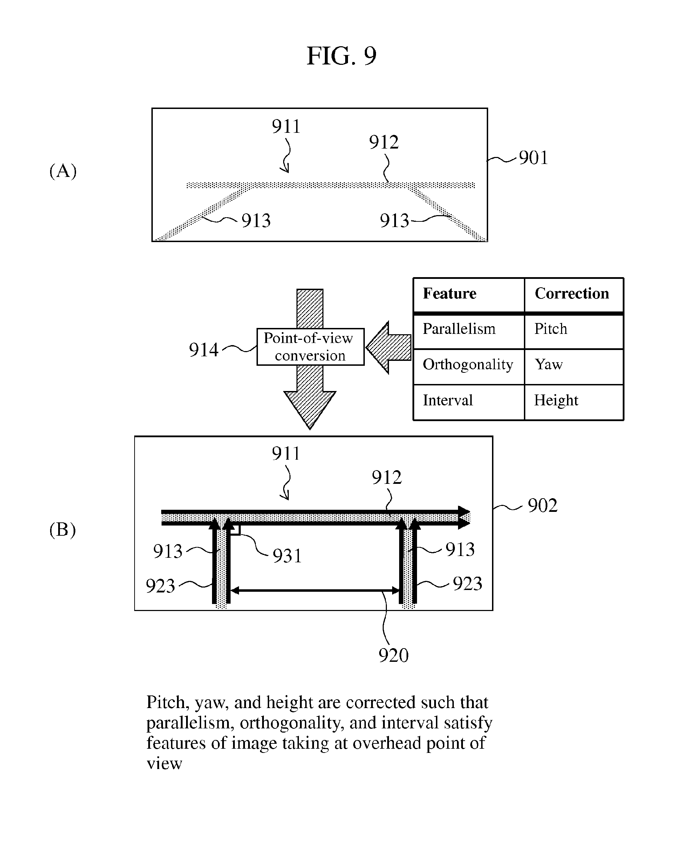

Hereinafter, an example calibration method for the extrinsic parameters is described with reference to FIGS. 9(A) and 9(B).

FIGS. 9(A) and 9(B) are diagrams for describing the calibration method for the extrinsic parameters (a pitch, a yaw, and a camera height). FIG. 9(A) illustrates an actual image of a recognition target object taken by an image taking unit, and FIG. 9(B) illustrates an overhead image thereof.

First, how to obtain the pitch is described. The pitch having the X axis as its rotational axis is estimated on the basis of properties of feature points after distortion correction.

For example, a recognition target object 911 displayed on an actual image 901 is a road marker, and includes: a white line 912 that extends in the transverse direction; and a plurality of parallel white lines 913, 913 ... that are orthogonal to the white line 912, extend in the vehicle travelling direction, and are placed so as to be parallel to each other at predetermined intervals in the transverse direction.

In the case where the recognition target object 911 is viewed from directly above and an overhead image 902 thereof is taken, edge point sequences 923 constituting the parallel white lines 913 of the recognition target object 911 should be parallel to each other also on the overhead image 902. In other words, the point of view at which the edge point sequences 923 constituting parallel components of the recognition target object 911 are parallel to each other corresponds to the point of view (overhead point of view) at which the recognition target object 911 is viewed from directly above.

Accordingly, how much the pitch needs to be changed from the current point of view in order to reach the overhead point of view is calculated. Further, how much the pitch needs to be changed in order to reach the overhead point of view when the camera is set as its design value is also calculated. A difference between these two amounts of pitch change is obtained, whereby the amount of optic axis deviation in the pitch direction from its design value can be estimated. Then, a parameter of the pitch as one of the extrinsic parameters can be calibrated on the basis of the estimated amount of optic axis deviation.

The amount of pitch change regarding how much the pitch needs to be changed from the current point of view in order to reach the overhead point of view can be calculated by designing a cost function and optimizing the cost function for the pitch. The cost function may be designed as follows.

$$\xi = \sum_{p,q \in C} \left(1 - v_p v_q\right)^2$$

In this function, $v_p$ and $v_q$ denote vectors each expressing a straight line approximated by an edge point sequence, on an image on which the intrinsic parameters are corrected. C denotes all combinations of the straight lines on the image. This is a function having the smallest value in the case where the approximated straight lines of the edge point sequences constituting parallel components on the image are parallel to each other.

Coordinates (u', v') of an edge point after point-of-view conversion can be expressed by the following expression

$$\begin{bmatrix} u' \\ v' \\ 1 \end{bmatrix} = sAR_{pitch}A^{-1}\begin{bmatrix} u \\ v \\ 1 \end{bmatrix}$$

with the use of the following rotation matrix regarding the pitch.

$$R_{pitch} = \begin{pmatrix} 1 & 0 & 0 \\ 0 & \cos\theta & -\sin\theta \\ 0 & \sin\theta & \cos\theta \end{pmatrix}$$

In these expressions, (u, v) denotes image coordinates before point-of-view conversion, s denotes a scale factor in the case of projection onto an image plane, and A denotes an intrinsic parameter matrix. Assuming that a pitch angle for obtaining an overhead point of view obtained through optimization is $\theta\char94_{ohv}$ and a pitch angle for obtaining an overhead point of view from the design value is $\theta_{ohv}$, an amount of deviation $\Delta\theta$ from the design value of the pitch angle is obtained by the following expression.

$$\Delta\theta = \theta\char94_{ohv} - \theta_{ohv}$$

On this occasion, a state of the vehicle needs to be considered. For example, the pitch angle is also influenced by a change in vehicle attitude due to a change in load caused by breaking or steering. In order to correctly obtain the amount of deviation in a steady state, image data taken when such a change in load does not occur needs to be used. For example, the following mechanism is used. That is, information on the amount of breaking or steering is acquired from a CAN, and it is determined whether or not an action occurs, the action regarding a change in attitude due to a change in load caused by the breaking or steering.

Such a mechanism enables knowing the amount of attitude change conversely. This can be achieved by obtaining a pitch angle for obtaining the overhead point of view for each of the case where a change in load occurs and a steady state and calculating a difference between the obtained pitch angles. The above-mentioned method of calculating the amount of deviation of the pitch angle is given as a mere example, and another method may be adopted.

Next, how to obtain the yaw is described. The yaw is estimated on the basis of orthogonality 931 of a straight line. Similarly to the pitch, how much the yaw needs to be changed in order to reach an ideal overhead point of view is calculated. If the yaw is changed, the white line 912 in the horizontal direction of the image 901 illustrated in FIG. 9(A) inclines, and the orthogonality of the white line 912 to the parallel white lines 913 in the vertical direction changes. In the case of image taking at the ideal overhead point of view, as illustrated in the overhead image 902 in FIG. 9(B), the straight lines 912 and 913 have the orthogonality 931 to each other. Accordingly, the yaw at which the straight lines 912 and 913 are orthogonal to each other is obtained according to an optimization method or the like.

That is, how much the yaw needs to be changed from the current point of view in order to reach the overhead point of view is calculated. Further, how much the yaw needs to be changed in order to reach the overhead point of view when the camera is set as its design value is also calculated. A difference between these two amounts of yaw change is obtained, whereby the amount of optic axis deviation in the yaw direction from its design value can be estimated. Then, a parameter of the yaw as one of the extrinsic parameters can be calibrated on the basis of the estimated amount of optic axis deviation.

Next, how to obtain the camera height is described. The camera height is estimated on the basis of the interval between straight lines parallel to each other. For example, in the case of the recognition target object 911 illustrated in FIGS. 9(A) and 9(B), an interval 920 between the parallel white lines 913 and 913 is set so as to fall within a given range. An image on which the interval between the parallel white lines 913 and 913 is a given value can be generated by adjusting the camera height at the time of overhead conversion.

Accordingly, for example, the camera height is defined as a variable, and a cost function that becomes the smallest when the interval between straight lines becomes a given value is set. Then, the camera height that minimizes the cost function is obtained according to an optimization method, whereby the camera height that generates an ideal overhead view can be estimated.

The cost function is expressed by, for example, the following expression.

$$\xi = \sum_{p,q \in C}\left(\left(\frac{1}{N_p}\sum v_p \cdot b_2 - \frac{1}{N_q}\sum v_q \cdot b_2\right) - d_{pq}\right)^2$$

In this function, $v_p$ and $v_q$ denote vectors each expressing a straight line after pitch correction. $b_2$ denotes a second major component average value of each straight line after pitch correction, and $v_p \cdot b2$ denotes a second major component average vector direction component of $v_p$. dpq denotes a difference on the second major component axis based on q between straight lines p and q. $N_p$ and Nq denote the number of feature points on the straight line p and the number of feature points on the straight line q, respectively.

Accordingly, the amount of camera height deviation from its design value can be estimated by obtaining a difference between the estimated camera height and the camera height when the camera is set as its design value. Then, a parameter of the camera height as one of the extrinsic parameters can be calibrated on the basis of the estimated amount of camera height deviation.

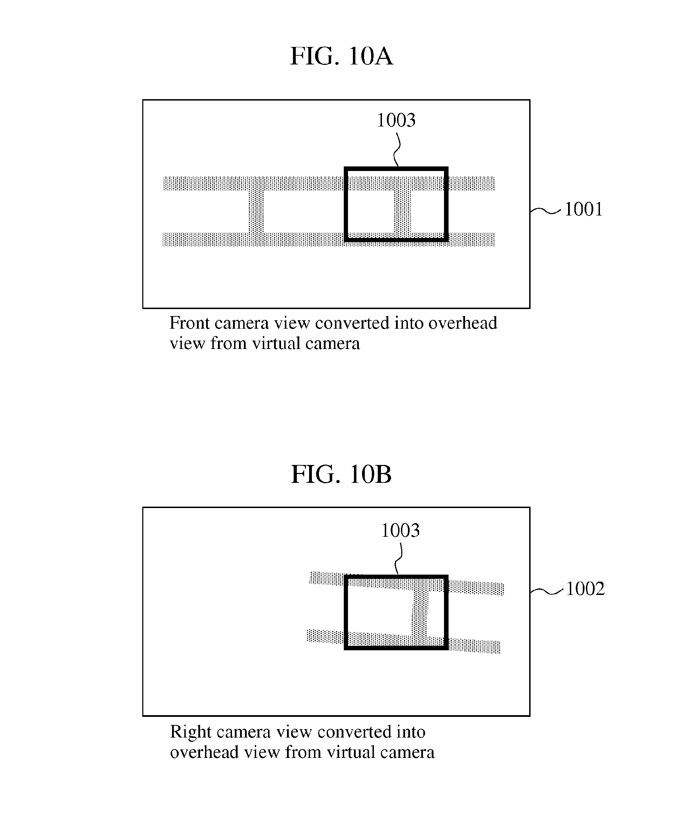

Next, how to obtain a roll angle and a translation components is described with reference to FIGS. 10(A) and 10(B).

FIGS. 10(A) and 10(B) are diagrams for describing a calibration method for extrinsic parameters (a roll and a translation). FIG. 10(A) illustrates an overhead image obtained by converting an image of a front camera into an overhead point of view, and FIG. 10(B) illustrates an overhead image obtained by converting an image of a right camera into an overhead point of view. The overhead view generated using the parameters obtained in the above-mentioned processes is used to calibrate the roll angle and the translation components.

A vehicle 1003 has four cameras (front, back, left, and right cameras) mounted thereon as image taking units, and description is given of the case where the roll and the translation components are calibrated between the front camera and the right camera. A correction method for the other cameras is similar.

Lastly, the roll and the position (xc, yc, zc) of the camera are estimated. The roll and the position of the camera are estimated by image alignment between the cameras. An overhead image 1001 converted into an overhead point of view is generated using the parameters of the front camera obtained in the above-mentioned processes. The overhead image is generated by converting an image of the front camera into an image of an overhead camera that is assumed to exist at the overhead point of view. Camera parameters of the overhead camera may be set to desired values so as to suit a view to be displayed. Similarly, an overhead image 1002 is generated by converting an image of the right camera into an image at the overhead point of view taken by the same overhead camera. That is, the overhead images 1001 and 1002 are taken at the same point of view.

If the calibration is completed, the images 1001 and 1002 do not have any deviation. In reality, however, the front, back, left, and right cameras cannot avoid deviation deriving from errors from design values of the roll and the set position. Accordingly, the roll and the camera position (xc, yc, zc) are estimated such that deviation in the overhead image 1001 and the overhead image 1002 is eliminated. An image region 1003 is set to the overhead camera image in order to determine deviation in the images. In the image region 1003, an image taking target common to overlapping image taking regions of the front and right cameras is displayed. The roll and the camera position (xc, yc, zc) are corrected such that the camera views in this region coincide with each other.

Various correction methods can be conceived. For example, the overhead view of the front camera is defined as a reference, and the roll and the camera position (xc, yc, zc) are corrected such that the overhead view of the right camera coincides with the overhead view of the front camera. In the case where the overhead view of the front camera has remarkable deviation, this correction method causes deviation in the roll and the camera position (xc, yc, zc) of another camera, and hence another correction method may be adopted. For example, in the case where it is known that deviation in the set position of the camera is small, deviation in an overhead view due to errors of the parameters is also small. Hence, only the roll is first corrected such that the images coincide with each other as far as possible, and the camera position (xc, yc, zc) may be then finely modified. An optimization method for images such as the Lucas-Kanade method is used for the image alignment. Alternatively, feature information such as feature points extracted from the image and an equation of an edge straight line may be used for the image alignment.

The correction method between two cameras is as described above. Similar correction between two cameras is repeated, whereby correction among four cameras is carried out. For example, the correction is carried out between the front camera and the right camera, between the front camera and the left camera, and the right and left cameras and the back camera in the stated order. Another correction order may be adopted. Further, the correction may be repeatedly carried out as appropriate.

The image alignment is carried out such that the amounts of feature such as image brightnesses or image edge intensities of the cameras coincide with each other. If the translation components and rotational parameters of each camera are finely changed, how the overhead image looks changes. These parameters are changed until the overhead images coincide with each other, thus achieving the image alignment. The translation and the rotational parameters that allow the same view between the two cameras (the front camera and the right camera) are parameters to be obtained through the optimization.

A cost function that becomes the smallest when image brightnesses or image edge intensities of the cameras coincide with each other is designed, and parameters that enable the overhead images to coincide with each other are estimated, that is, the calibration is carried out by minimizing the cost function. Alternatively, instead of alignment of images themselves, correction may be carried out such that equations of the corresponding straight lines coincide with each other.

Alternatively, instead of alignment of images themselves, correction may be carried out such that equations of the corresponding straight lines coincide with each other. Specifically, an equation of a white line on an image is calculated, and image alignment is carried out such that the equations of the corresponding white lines between images coincide with each other. The corresponding white lines between the images refer to the same white line in a three-dimensional space. The translation and the rotational parameters of each camera are finely changed until the overhead images coincide with each other, whereby the white line equations can be made coincident with each other. A cost function that becomes the smallest when the corresponding white line equations coincide with each other is designed, and the translation and the rotational parameters that minimize the cost function are estimated, that is, the calibration is carried out.

According to the automotive camera system 1 having the above-mentioned configuration, if properties such as parallelism, linearity, and an interval are known, both the intrinsic parameters and the extrinsic parameters of each camera can be calibrated using the known properties. For example, although there are variations in a range of a line width, a crosswalk and the like can be used as a target for the calibration. That is, the calibration is possible using only a road sign without preparing a special reference marker or equipment for a vehicle. Height adjustment varies correspondingly to an error of a white line width, but effects can be expected in the case where strict position display is not required.

If the calibration is possible only by using a crosswalk, however, chances of the calibration are smaller. It is desirable that the calibration be possible using only a simple white line for lane indication or a linear structure in a vehicle running scene. Unfortunately, according to this method, the calibration is not possible using only a single white line. Accordingly, in order to obtain as many chances of the calibration as possible during vehicle running, it is necessary to gather information during the vehicle running and create target information necessary for the calibration.

Accordingly, description is given of a method of acquiring feature information that is necessary for the calibration in order to increase the number of scenes in which the calibration is possible during the vehicle running. A desirable target therefor is an object that frequently appears on a road and has linearity and parallelism, such as a white line for lane indication. The interval can be defined structurally to some degree, and information on the defined interval can be used. Note that, in the case where white lines are photographed once, only one set of the parallel white lines is obtained. The calibration requires a plurality of straight lines, and hence this information is insufficient. That is, the calibration requires information on the distance between a white line photographed at one position and the white line photographed at another position.

The white line photographed at another position is, for example, a while line photographed at the time of changing lanes. At the time of changing lanes, the relative position between a white line and a vehicle largely changes. Hence, if coordinate positions of the white line are stored at various relative position relations, such a situation that a plurality of white lines are photographed at the same time can be created. For a white line in another direction, for example, edge information on a stop line may be stored during the vehicle running. Although the parallelism between white lines cannot be kept, the parallelism of a rising edge and a falling edge of one white line can be secured. This needs to be satisfied at the same time at a plurality of portions on an image, and thus can apply to constraint conditions. Information on the interval between the white lines can be obtained by, for example, calculating the movement direction and the amount of movement of feature points from the speed and steering of a target vehicle.

In this way, information necessary for the calibration is gathered during the vehicle running, and a target is created, whereby the intrinsic parameters and the extrinsic parameters can be corrected during the vehicle running. That is, a process of photographing one white line at different times and obtaining the distance between the white lines is repeated, whereby a plurality of parallel straight lines and information on the interval therebetween can be acquired from one white line. If this process is performed on, for example, a white line for lane indication and a stop line, a calibration target can be configured. Accordingly, even in the case where a recognition target object convenient for the calibration, such as a crosswalk, does not exist, if a linear structure such as a white line exists, feature information necessary for the calibration can be generated.

A specific process therefor is described below.

First, an image is acquired during vehicle running at a time point t. Then, a white line on the image is recognized. Both the rising edge and the falling edge of the recognized white line are extracted as feature points. Subsequently, information on the extracted feature points is stored into a memory. Then, an image photographed at a next time point t+1 is acquired. The time point interval may be set to a desired value. The white line on the image photographed at the next time point t+1 is similarly recognized, and the rising edge and the falling edge thereof are extracted as feature points. On this occasion, if the relative position of the feature points at the time point t+1 has changed by a predetermined amount or more from the position of the feature points at the time point t, the feature points are stored into the memory. For the change by the predetermined amount or more, the amount of movement of a target vehicle is calculated from the speed and steering of the vehicle, and if the calculated amount is equal to or more than a predetermined value, it is determined that the vehicle has moved. At the same time, the amount of movement and the movement direction of the vehicle are also recorded. Determination thereof may be made on the basis of coordinates of the feature points obtained through the image recognition. The amount of movement of the vehicle is used to calculate the distance between the white lines necessary for the calibration.

Now, how to measure the interval between feature points is described. A feature point photographed at a given time point t is defined as pt. The same feature point photographed at the time point t+1 is defined as pt+1. Normally, the three-dimensional distance (the distance in the real space) between these two points photographed by a camera cannot be determined without necessary information such as set information of the camera. If information on the speed and steering of the vehicle is obtained, however, the three-dimensional distance between pt and pt+1 can be obtained. This is because pt and pt+1 are the same point but photographed at different positions, and the three-dimensional distance between these two points viewed from the camera is equal to the amount of movement of the vehicle. Accordingly, the movement direction and the amount of movement of the vehicle are calculated from the information on the speed and steering of the vehicle, whereby the three-dimensional distance between pt and pt+1 can be obtained. A technique of estimating the amount of movement of the vehicle from the speed and steering of the vehicle is a generally adopted technique called dead reckoning.

The above-mentioned process is repeated for t+2, t+3, ..., whereby information necessary for the calibration is collected. That is, coordinates of a feature point photographed at each time point (feature point coordinates at t, feature point coordinates at t+1, feature point coordinates at t+2, feature point coordinates at t+3, ...) is held in the memory, and the information is accumulated therein, whereby information to be required for a target is configured. On this occasion, the white line photographed at the time point t and the white line photographed at the time point t+1 do not necessarily need to be the same.

For the configuration of the target, the above-mentioned process is continued until at least two white lines in the vertical direction and information on the interval therebetween, as well as at least two white lines in the horizontal direction and information on the interval therebetween, are recorded for each camera image. For example, it is possible to use images of a stop line and a white line for a driving lane that are photographed at different relative positions. If this feature point information is distributed in a wide region that reaches a screen end with large distortion and a screen central portion with small distortion, in other words, the left end, right end, upper end, and lower end of an image, the feature point information contributes improvement in calibration accuracy. Hence, it is desirable to collect feature point information distributed as wide a region as possible.

Further, any line type (such as a broken line, a solid line, and a double line) may be adopted for a white line for driving lane indication as long as an edge can be extracted from a linear structure. Moreover, a road sign including linear components, such as a road sign indicating the existence of a crosswalk, may be adopted.

Hereinabove, the embodiment of the present invention is described in detail. The present invention is not limited to the above-mentioned embodiment, and designs thereof can be variously changed in a range not departing from the spirits of the present invention described in What is claimed is. For example, the above-mentioned embodiment is described in detail for the purpose of easy understanding of the present invention, and hence the present invention is not necessarily limited to a structure including all the described configurations. Further, part of configurations of one embodiment can be replaced with configurations of another embodiment, and configurations of one embodiment can be added to configurations of another embodiment. Moreover, addition, deletion, and replacement of a given configuration are possible for part of configurations of each embodiment.

DESCRIPTION OF SYMBOLS

| | |
|---|---|
| 1 | automotive camera system |
| 105 | image processing device |
| 301 | feature point extracting unit |
| 303 | intrinsic parameter calibrating unit |
| 304 | extrinsic parameter calibrating unit |
| 307 to 310 | image taking unit |

**Claims**

1. A calibration method for an automotive camera system that recognizes an image of an environment around a vehicle, the method comprising:

   taking the image around the vehicle;
   recognizing a recognition target object including a preset straight line portion, from the taken image, and extracting feature points of the recognition target object from the image;
   projecting the extracted feature points onto a virtual spherical surface (601), estimating an intrinsic parameter of an image taking unit (307-310) on a basis of a shape of a feature point sequence formed on the virtual spherical surface (601), and calibrating the estimated intrinsic parameter; and
   calculating an overhead point of view of the image on a basis of the extracted feature points, estimating an extrinsic parameter of the image taking unit (307-310) on a basis of the calculated overhead point of view, and calibrating the estimated extrinsic parameter.

2. The calibration method according to claim 1, comprising:

extracting, as the feature points, an edge point sequence along the straight line portion, from the image; and adjusting the intrinsic parameter, and thus causing the edge point sequence to extend along an outer circumferential circle defined by a cross-section passing through a center of the virtual spherical surface (601), to thereby calibrate the intrinsic parameter.

3. The calibration method according to claim 1 or 2, comprising adjusting the extrinsic parameter, and thus making an angle formed by a point of view of the image and the overhead point of view coincident with a preset reference angle, to thereby calibrate the extrinsic parameter.

4. The calibration method according to claim 3, comprising:

taking, by a plurality of image taking units (307-310), images of the same recognition target object at positions different from each other; and
calibrating the extrinsic parameter using a first image and a second image,
the first image being obtained by converting a point of view of an image taken by a first image taking unit, into the overhead point of view,
the second image being obtained by converting a point of view of an image taken by a second image taking unit, into the overhead point of view.

5. The calibration method according to any one of claim 1 to claim 4, wherein
the intrinsic parameter comprises at least one of lens distortion, an optic axis, an aspect ratio of a unit imaging element, and a focal length of the image taking unit; and/or
wherein the extrinsic parameter comprises a three-dimensional position and an attitude state of the image taking unit.

6. The calibration method according to any one of claim 1 to claim 5, comprising:

acquiring behavior information of the vehicle; and
estimating an interval between the feature points on a basis of the behavior information of the vehicle, to thereby extract the feature points.

7. The calibration method according to claim 1, comprising extracting the feature points using information acquired from a car navigation system.

8. An automotive camera system that recognizes an image of an environment around a vehicle, comprising:

an image taking unit that takes the image around the vehicle;
a feature point extracting unit (301) that recognizes a recognition target object including a preset straight line portion, from the image taken by the image taking unit, and extracts feature points of the recognition target object from the image;
an intrinsic parameter calibrating unit (303) that projects the feature points extracted by the feature point extracting unit onto a virtual spherical surface, estimates an intrinsic parameter of the image taking unit on a basis of a shape of a feature point sequence formed on the virtual spherical surface, and calibrates the estimated intrinsic parameter; and
an extrinsic parameter calibrating unit (304) that calculates an overhead point of view of the image on a basis of the feature points extracted by the feature point extracting unit, estimates an extrinsic parameter of the image taking unit on a basis of the calculated overhead point of view, and calibrates the estimated extrinsic parameter.

9. The automotive camera system according to claim 8, wherein
the feature point extracting unit (301) extracts, as the feature points, an edge point sequence along the straight line portion, from the image, and
the intrinsic parameter calibrating unit (303) adjusts the intrinsic parameter, and thus causes the edge point sequence to extend along an outer circumferential circle defined by a cross-section passing through a center of the virtual spherical surface, to thereby calibrate the intrinsic parameter.

10. The automotive camera system according to claim 8 or 9, wherein
the extrinsic parameter calibrating unit (304) adjusts the extrinsic parameter, and thus makes an angle formed by a point of view of the image and the overhead point of view coincident with a preset reference angle, to thereby calibrate the extrinsic parameter.

11. The automotive camera system according to claim 10, comprising a plurality of image taking units capable of taking images of the same recognition target object at positions different from each other, wherein
the extrinsic parameter calibrating unit (304) calibrates the extrinsic parameter using a first image and a second image,
the first image being obtained by converting a point of view of an image taken by a first image taking unit, into the overhead point of view,
the second image being obtained by converting a point of view of an image taken by a second image taking unit, into the overhead point of view.

12. The automotive camera system according to any one of claim 8 to claim 11, wherein
the intrinsic parameter comprises at least one of lens distortion, an optic axis, an aspect ratio of a unit imaging element, and a focal length of the image taking unit; and/or
wherein the extrinsic parameter comprises a three-dimensional position and an attitude state of the image taking unit.

13. The automotive camera system according to any one of claim 8 to claim 12, further comprising a vehicle behavior information acquiring unit that acquires behavior information of the vehicle, wherein
the feature point extracting unit (301) estimates an interval between the feature points on a basis of the behavior information of the vehicle, to thereby extract the feature points.

14. The automotive camera system according to claim 8, wherein
the feature point extracting unit (301) extracts the feature points using information acquired from a car navigation system.

15. A calibration program for an automotive camera system to be executed by an image processing device, the calibration program comprising:

recognizing a recognition target object including a preset straight line portion, from an image around a vehicle taken by an image taking unit of the automotive camera system, and extracting feature points of the recognition target object from the image;
projecting the extracted feature points onto a virtual spherical surface, estimating an intrinsic parameter of the image taking unit on a basis of a shape of a feature point sequence formed on the virtual spherical surface, and calibrating the estimated intrinsic parameter; and
calculating an overhead point of view of the image on a basis of the extracted feature points, estimating an extrinsic parameter of the image taking unit on a basis of the calculated overhead point of view, and calibrating the estimated extrinsic parameter.

FIG. 1

FIG. 2

FIG. 3

FIG. 4

# FIG. 5

Image processing device 105

FIG. 6

## FIG. 7A

In the case of curved line, projected points are not on large circle

O
701 702
711
710

## FIG. 7B

In the case of straight line, projected points are on large circle

O
704
703
712
710

## FIG. 7C

Calibration is carried out such that projected points are on large circle

O
705
703
706
712
710

FIG. 8A                    FIG. 8B                    FIG. 8C

Roll                       Pitch                      Yaw

FIG. 8D

## FIG. 9

(A)

911

912

~901

913    913

| Feature | Correction |
|---|---|
| Parallelism | Pitch |
| Orthogonality | Yaw |
| Interval | Height |

914~ Point-of-view conversion

(B)

911

912

~902

913~    ~913

923~    ~923

913~    ~913

~931

920

Pitch, yaw, and height are corrected such that parallelism, orthogonality, and interval satisfy features of image taking at overhead point of view

FIG. 10A

Front camera view converted into overhead view from virtual camera

FIG. 10B

Right camera view converted into overhead view from virtual camera

Europäisches
Patentamt

European
Patent Office

Office européen
des brevets

# EUROPEAN SEARCH REPORT

Application Number

EP 12 19 4564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIGANG LI ET AL: "Easy Calibration of a Blind-Spot-Free Fisheye Camera System Using a Scene of a Parking Space", IEEE TRANSACTIONS ON INTELLIGENT TRANSPORTATION SYSTEMS, IEEE, PISCATAWAY, NJ, USA, vol. 12, no. 1, 1 March 2011 (2011-03-01), pages 232-242, XP011348841, ISSN: 1524-9050, DOI: 10.1109/TITS.2010.2085435 * abstract; figures 1, 2 * * section III Calibrating the Blind-Spot-Free Camera System; figures 3-8 * | 1-15 | INV. G06T7/00 |
| X | XIANGHUA YING ET AL: "Fisheye Lenses Calibration Using Straight-Line Spherical Perspective Projection Constraint", 1 January 2005 (2005-01-01), COMPUTER VISION - ACCV 2006 LECTURE NOTES IN COMPUTER SCIENCE;;LNCS, SPRINGER, BERLIN, DE, PAGE(S) 61 - 70, XP019027496, ISBN: 978-3-540-31244-4 * the whole document * | 1-15 | |
| | | | TECHNICAL FIELDS SEARCHED (IPC) |
| | | | G06T H04N |
| A | TARAK GANDHI ET AL: "Vehicle Surround Capture: Survey of Techniques and a Novel Omni-Video-Based Approach for Dynamic Panoramic Surround Maps", IEEE TRANSACTIONS ON INTELLIGENT TRANSPORTATION SYSTEMS, IEEE, PISCATAWAY, NJ, USA, vol. 7, no. 3, 1 September 2006 (2006-09-01), pages 293-308, XP002659721, ISSN: 1524-9050, DOI: 10.1109/TITS.2006.880635 * the whole document * | 1-15 | |

-/--

The present search report has been drawn up for all claims

| Place of search | Date of completion of the search | Examiner |
|---|---|---|
| Munich | 21 March 2013 | Blaszczyk, Marek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

## EUROPEAN SEARCH REPORT

Application Number

EP 12 19 4564

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAO XIAO ET AL: "Capture of Vehicle Surroundings Using a Pair of Panoramic Annular Lens Cameras", TELECOMMUNICATIONS, 2007. ITST '07. 7TH INTERNATIONAL CONFERENCE ON ITS, IEEE, PISCATAWAY, NJ, USA, 1 June 2007 (2007-06-01), pages 1-5, XP031130357, DOI: 10.1109/ITST.2007.4295887 ISBN: 978-1-4244-1177-1 * the whole document *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 21 March 2013 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

           .......................................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004200819 A
- JP 2008011174 A